# EUROPEAN PATENT SPECIFICATION

(11) **EP 4 567 677 B1**
(45) Date of publication and mention of the grant of the patent: **22.04.2026**
(21) Application number: 24218111.3
(22) Date of filing: 06.12.2024
(51) Int. Cl.: G06E 3/00, G06N 3/067

(54) **LARGE-SCALE DISTRIBUTED PHOTOELECTRIC INTELLIGENT COMPUTING ARCHITECTURE AND CHIP SYSTEM**
VERTEILTE PHOTOELEKTRISCHE INTELLIGENTE RECHNERARCHITEKTUR IN GROSSEM MASSSTAB UND CHIPSYSTEM
ARCHITECTURE INFORMATIQUE INTELLIGENTE PHOTOÉLECTRIQUE DISTRIBUÉE À GRANDE ÉCHELLE ET SYSTÈME DE PUCE

(30) Priority: 06.12.2023 CN 202311659650
(43) Date of publication of application: 11.06.2025
(73) Proprietor: Tsinghua University, Beijing 100084 (CN)
(72) Inventor: Fang, Lu, Beijing, 100084 (CN); Xu, Zhihao, Beijing, 100084 (CN); Zhou, Tiankuang, Beijing, 100084 (CN)
(74) Representative: Petraz, Gilberto Luigi

(56) References cited:
- WO-A1-2020/191217
- LI YUHANG ET AL: "Optical information transfer through random unknown diffusers using electronic encoding and diffractive decoding", ADVANCED PHOTONICS SPIE USA, SOCIETY OF PHOTO-OPTICAL INSTRUMENTATION ENGINEERS, 1000 20TH ST. BELLINGHAM WA 98225-6705 USA, vol. 5, no. 4, 28 August 2023 (2023-08-28), pages 46009, XP060186441, ISSN: 2577-5421, [retrieved on 20230828], DOI: 10.1117/1.AP.5.4.046009
- ANONYMOUS ERIK ET AL: "Double exposure makes dense high-resolution diffractive optics | SPIE, the international society for optics and photonics: SPIE", 22 March 2007 (2007-03-22), US, XP093272270, ISSN: 1818-2259, Retrieved from the Internet <URL:https://spie.org/news/0599-double-exposure-makes-dense-high-resolution-diffractive-optics> [retrieved on 20250423], DOI: 10.1117/2.1200702.0599
- GE LULU ET AL: "Classification Using Hyperdimensional Computing: A Review", IEEE CIRCUITS AND SYSTEMS MAGAZINE, vol. 20, no. 2, 3 June 2020 (2020-06-03), pages 30 - 47, XP011791488, ISSN: 1531-636X, [retrieved on 20200602], DOI: 10.1109/MCAS.2020.2988388

## Description

### TECHNICAL FIELD

The disclosure relates to the technical field of artificial general intelligence (AGI) large model and silicon optical integrated photoelectric computing chip, in particular to a large-scale distributed photoelectric intelligent computing architecture and a chip system.

### BACKGROUND

As performance of computing architectures continues to improve, AGI develops rapidly. In order to perceive and process complex multimodal information from a real world, high-throughput and high energy-efficient computing architectures are needed. Continuous pursuit for high-performance computing presents major challenges for academia and industry in post-Moore era. Use of traditional electronic devices such as graphics processing unit (GPU) for artificial intelligence (AI) big model computing (e.g., big models for natural language processing, and medical big models, etc.) is commonly faced with problems such as huge energy overheads and limited inference speeds, which makes it difficult to continue to support development of advanced AI big models and AGI. The pursuit of a balance between computing throughput and efficiency has become a goal of high-performance computing research.

WO 2020/191217 A1 discloses an optoelectronic computing system including a first semiconductor die having a photonic integrated circuit (PIC) and a second semiconductor die having an electronic integrated circuit (EIC). The PIC includes optical waveguides, in which input values are encoded on respective optical signals carried by the optical waveguides. The PIC includes an optical copying distribution network having optical splitters. The PIC includes an array of optoelectronic circuitry sections, each receiving an optical wave from one of the output ports of the optical copying distribution network, and each optoelectronic circuitry section includes: at least one photodetector detecting at least one optical wave from the optoelectronic operation. The EIC includes electrical input ports receiving respective electrical values. The first semiconductor die and the second semiconductor die are electrically coupled in a controlled collapsed chip connection, with the electrical output port of the PIC connected to one of the electrical input ports of the EIC.

### SUMMARY

The invention is set out in the appended set of claims.

The large-scale distributed photoelectric intelligence computing system and method of the embodiments of the disclosure have the ability to handle large-scale high-resolution two-dimensional input and output. For complex AI tasks in the current stage, the design of chiplets has the potential to support larger-scale network parameters and computational capabilities.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

The above and/or additional aspects and advantages of embodiments of the disclosure will become apparent and more readily appreciated from the following descriptions made with reference to the accompanying drawings.
FIG. 1 is a block diagram of a large-scale distributed photoelectric intelligent computing system according to an embodiment of the disclosure.
FIG. 2 is a diagram of interconnection relation of components in a chiplet architecture according to an embodiment of the disclosure.
FIG. 3 is a schematic diagram of integrated photonics processing chiplets according to an embodiment of the disclosure.
FIG. 4 is a flowchart of a large-scale distributed photonics intelligent computing method according to an embodiment of the disclosure.
FIG. 5 is an actual microscopic shot of integrated photonics processing chiplets according to an embodiment of the disclosure.
FIG. 6 is a schematic diagram of a complete photonic neural network formed by multiplexing component chiplets according to an embodiment of the disclosure.
FIG. 7 illustrates accuracies of tests for a photonic neural network constituted by chiplets under different datasets according to an embodiment of the disclosure.

### DETAILED DESCRIPTION

It is noted that the embodiments of the disclosure and features in the embodiments may be combined with each other without conflict. The disclosure will be described in detail below with reference to the accompanying drawings in combination with the embodiments.

In order to enable those skilled in the art to better understand the embodiments of the disclosure, the technical solutions in the embodiments of the disclosure will be described clearly and completely in the following in combination with the accompanying drawings in the embodiments of the disclosure.

As a novel computing architecture, photonic computing has been receiving increasing attention, which provides unprecedented light-speed computing capabilities with extremely low energy consumption and offers new architectural ideas for high-performance computing. Recent researches related to optical computing provide various forms of photonic computing architectures. For example, high parallelism of free-space optics can realize basic image operator feature extraction, reservoir computing, deep neural network, and on the like. Meanwhile, a development of integrated photonics is expected to achieve optoelectronic integrated photonic computing chips with higher spatial efficiency and lower energy consumption, and has been used to construct a variety of on-chip neural networks to implement intelligent tasks. For example, a Mach-Zehnder interferometer (MZI) array realized on chip has been used to construct a real-valued neural network and a complex-valued neural network. On-chip two-dimensional optical diffractometers have also been used for optical matrix multiplication. By means of device multiplexing, more complex neural network operations, such as two-dimensional image operations in a convolutional neural network, can be implemented by means of a photonic convolutional kernel. However, the current scale of photonic integrated circuit (PIC)-based photonic computing, especially on-chip optical neural network (ONN), is usually at a level of hundreds to thousands of parameters, and there are only dozens of reconfigurable adjustable parameters, and thus only simple and basic machine learning tasks are supported, such as simple pattern recognition, vowel audio classification, and the like. It is difficult for on-chip ONNs to achieve larger neural network computing scales. Despite advantages in spatial compactness and energy efficiency, current PICs still suffer from inevitable time-varying on-chip computing physical errors. The computational power is limited by limited network scale and number of parameters, and at the current stage, the PICs is far from being able to meet a requirement of a real-world AGI large model tasks in the real world.

In order to realize large-scale, high energy-efficient on-chip photonic computing, simply expanding a physical scale of an existing photonic neural network chip at a wafer level or simply multiplexing a single photonic chip is not a practical approach for the following reasons. The reasons include: (a) tens to hundreds of parameters of each reconfigurable optical device are required to map network parameters, each reconfigurable optical device is at micron level, and it is challenging to accommodate a ONN with a large number of configurable parameters on a single wafer; (b) due to noises of devices and calibration errors, analog noises inevitably grow exponentially as the number of neural network layers increases, which makes it difficult to guarantee accuracy of large-scale ONNs; (c) two-dimensional spatial input (e.g., image input) has a large amount of redundancy, and information represented by each site is not completely independent from each other. Its effective amount of information can be compressed to a lower dimension, i.e., it can be efficiently processed on a smaller scale computing hardware. Therefore, simply expanding existing architectures cannot proportionally improve the computing performance and cannot effectively support a larger number of neural network parameters and a more complex intelligent computing task.

Essentially, an advanced intelligent photonic computing architecture still have a series of difficulties to be solved. Firstly, the architecture should accept high-dimensional inputs but be as compact as possible in order to obtain valid information and eliminate high redundancy. Secondly, in order to reduce error accumulation, deep architecture need to be avoided, while sufficient computing capability should be maintained. In addition, in order to obtain optimal computing performance, the architecture needs to have spatial computing characteristics such as data translation invariance to ensure network generalization, and also needs to have a data deformation capability similar to full-connection computing to extract higher-level semantic information, so as to achieve a balance between multi-scale local information processing and unified global information processing.

Therefore, existing integrated photonics on-chip intelligent computing is generally limited in scale and is difficult to expand, which makes it difficult to realize deep computation on a larger network scale and meet a requirement of computing efficiency and energy consumption of AGI and large models at the current stage. The disclosure provides a potential means to deal with this problem by combining reconfigurable chiplets distributed computing with integrated photonics on-chip computing.

A large-scale distributed photoelectric intelligent computing system and method according to the embodiments of the disclosure are described below with reference to the accompanying drawings.

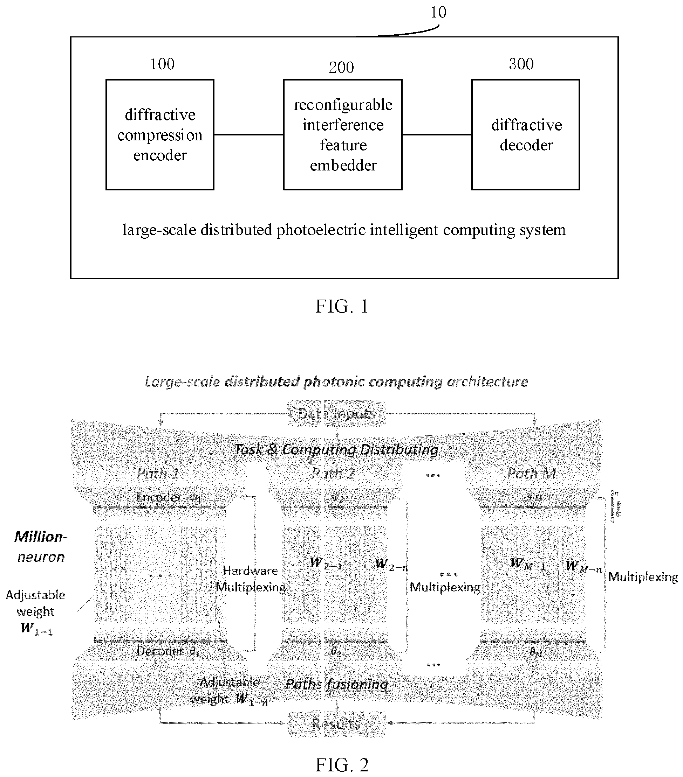

FIG. 1 is a structural diagram of a large-scale distributed photoelectric intelligent computing system 10 of an embodiment of the disclosure.

As illustrated in FIG. 1, the system 10 includes: a diffractive compression encoder 100, a reconfigurable interference feature embedder 200, and a diffractive decoder 300.

The diffractive compression encoder 100 is configured to collect two-dimensional light field information through a grating array, convert the two-dimensional light field information into one-dimensional information through waveguide transmission and transmit the one-dimensional information to a first diffractive region, and perform compute by using a diffractive coding weight, so as to output a one-dimensional vector through an output end of the first diffractive region.

The reconfigurable interference feature embedder 200 consists of an interferometer array composed of a plurality of thermo-optical phase modulators, and the interferometer array is configured to perform a multiplication operation of a unitary matrix based on the one-dimensional vector, to output a computed result in a one-dimensional vector form.

The diffractive decoder 300 is configured for diffractive decoding the computed result in the one-dimensional vector form using a second diffractive region, to compute and output final light field information by using a diffractive decoding weight.

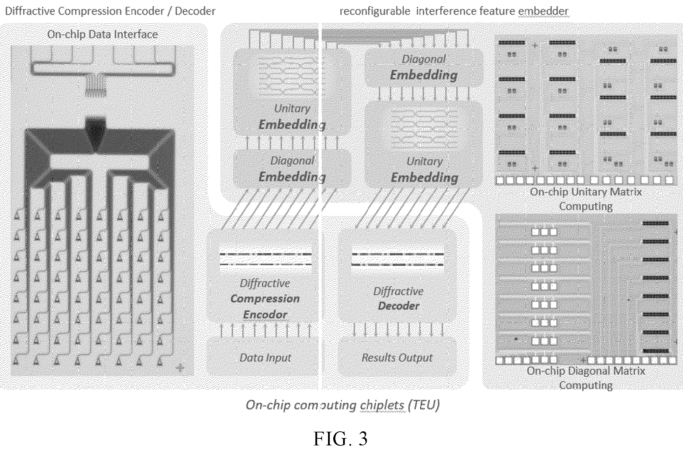

It is appreciated that the implementation of the system of the disclosure is realized based on an integrated optical interference-diffractive hybrid architecture of large-scale chiplets, as shown in FIGS. 2 and 3:

diffractive compression encoder M1, in an embodiment of the disclosure, is obtained by on-chip silicon photonics process, on-chip diffraction can realize multiple functions, such as on-chip diffraction is used for coding, compressing and decoding, and the like.

For example, the diffractive compression encoder, supports up to 64 channels of input, 8 channels of output, and a diffractive region size of 200 micrometers * 300 micrometers, and up to 2 layers of coding weights, each containing 1024 parameters at most. These parameters are written into the diffractive region by double exposure in the form of etched air trenches.

In the present disclosure, the input is a two-dimensional light field input. The two-dimensional light field is collected by the grating array, converted into one-dimension by waveguide transmission, and propagated by diffraction to arrive at a weight region consisting of air trenches for phase modulation, and then propagated by diffraction for a period of time to arrive at an output end and output in one-dimension.

In detail, data input is in the form of the grating array, using a total of 64 gratings arranged in 8*8, which are wired through waveguide to convert the original two-dimensional light field information into one-dimensional vector arrangement as the actual input to the diffractive region. Through passive processing of diffractive weights, an 8 times compressed encoding result can be obtained at the output end of the diffractive region. This coding result is a one-dimensional output.

For example, diffractive coding weights (etched air trenches of different lengths) can be obtained by machine learning gradient descent.

It is understood that due to irreversible nature of a double exposure etching process, the diffractive weights are usually non-reconfigurable and non-adjustable. Therefore, when training weights, a general large-scale dataset is used for training (a complete ImageNet dataset), to obtain more general and more universal diffractive coding weights.

It is understood that a diffraction process is modeled by an angular spectral model. The weights are arrays of air trenches with varying lengths processed by an electron beam exposure process, and the diffractive weights are represented by the lengths of these air trenches.

It is understood that since the physical processes of propagation and modulation can already be obtained by modeling, a simulation of these physical processes can be implemented on a machine learning platform, such as tensorflow platform, where the lengths of the air trenches are set as trainable parameters, and after a gradient descent optimization, a set of optimized length distributions of the air trenches can be obtained.

It is understood that the diffractive weights (the length distributions of the air trench) of the embodiments of the disclosure are used to perform a coding compression for input light field data. Depending on different computing tasks, specially trained weights allow the coding compression to be more specific and achieve better results under the computing task.

It is understood that although this operation is not conducive to achieving an extreme performance in a certain small-scale dedicated dataset, it is highly migratory and generalizable, and can support common coding dimension reduction operations for different datasets, to enhance the universality of this component and reduce hardware processing cost for computational content migration.

For example, a spatial light modulation device, such as a liquid crystal phase modulator device or a digital micromirror array, is usually used to construct a fluctuating light field with certain spatially distributed amplitude and phases. The fluctuating light field is focused at the grating array as information input to the diffractive compression encoder.

In conclusion, through the diffractive coding of the large-scale chiplets, dimensional redundancy of the two-dimensional information input is eliminated as much as possible, to make the computation more efficient. Since a diffractive computation is passive, energy efficiency is improved by up to two orders of magnitude compared to other AI chips.

For the reconfigurable interference feature embedder M2, it is known that the reconfigurable interference feature embedder is composed of multiple on-chip integrated MZI arrays. The on-chip integrated MZI arrays are integrated using a silicon photonics process. The on-chip integrated MZI arrays are to change dielectric constants of waveguide through an electrothermal effect of titanium nitride (TiN), and thus change a phase of any signal passing through this section of waveguide.

In detail, an input of the M2 is coding and compressing results of the M1, in the form of one-dimensional vectors. This input one-dimensional vectors are computed by the MZI arrays to obtain a new set of one-dimensional vectors with same lengths as the input. This new set of vectors is used as the output a computed result in a one-dimensional vector form of this component for the subsequent diffractive decoder M3 to continue the computing.

For example, based on this principle of basic thermo-optical phase modulation, the interferometer array can realize a matrix computation of input signal vectors. In detail, for the 8-channel signals output from the diffractive compression encoder of the aforementioned M1, the deployment of interferometer array consisting of 56 thermo-optical phase modulators can realize any 8* 8 unitary matrix multiplication operation. Elements of the unitary matrix can be obtained by machine learning gradient descent training and mapped to phase change parameters of the phase shifter.

For example, in the reconfigurable interference feature embedder, two aforementioned unitary matrix multipliers are deployed along with the diagonal matrix multiplier, to realize modulation operation of an arbitrary matrix. Since the arbitrary matrix can be decomposed into a product of one unitary matrix, one diagonal matrix, and another unitary matrix by means of singular value decomposition (SVD), the interferometer array deployed above can realize the multiplication operations of arbitrary matrix.

In the embodiments of the disclosure, the reconfigurable interference feature embedder has a programmable reconfigurable capability. Depending on differences of computing contents, a supply voltage of each phase shifter can be dynamically adjusted in real time to realize multiplication of different matrices. With this reconfigurable interference feature embedder, the disclosure has a capability of multiplexing hardware to realize larger-scale neural network computation. Generally, this embedder is used for feature embedding computation of encoded information.

In the embodiment of the disclosure, reconfigurable multiplexing of computational functions is integrally realized by the reconfigurable interference feature embedder and a diffractive compression encoder with global training weights. Although the adjustable network weights only correspond to interference computing portion, there is no obvious constraint on richness of network functions, which proposes a new solution idea for economy and convenience of photonic chip reconfiguration.

The diffractive decoder M3 may be understood as an on-chip diffractive decoder integrated by using the silicon photonics process.

For example, the diffractive decoder M3 may diffractive decode the 8-channel information, i.e., the computed result in the one-dimensional vector form, output from the reconfigurable interference feature embedder M2, and outputs the final light field information.

It is understood that the hardware design of M3 is dual with the diffractive compression encoder M1. Decoding weights of M3 are also obtained by global data training (with a same dataset as that of the encoder M1). The diffractive region of the diffractive decoder is etched with air diffractive trenches with different length distributions by the same double exposure etching process as the encoder M1. By the passive compute of the decoding weights, up to 64 channels of decoded data can be supported for final output in the form of 8*8 grating arrays, which are received using photoelectric diode arrays.

The information importing and collecting interface array M4 may also be included. It is understood that since the disclosure is not a single chip with fixed input and output limitations, but rather modular chiplets consisting of a plurality of the foregoing components. The disclosure may be deployed with a plurality of data interfaces to read computed results from any component or input data to be computed to any component.

In detail, the aforementioned components M1-M3 may be used in combination as a combined component. For example, M1 and M2 may form a reconfigurable compression and compute encoder Ma, and the computed results of Ma constitute a new two-dimensional data, which is input into a new M1 for further coding and compressing, thereby realizing multilevel coding, and compressing information and reducing dimensional redundancy of the original data to a maximum extent. Similarly, a larger-scale decoder array can be formed by combining the components M2 and M3.

As a result, a task with larger computational complexity is solved in a distributed manner by parallelized splitting a computing task, which provides new ideas for simplified processing of complex future AI models.

In conclusion, through cascading multiplexing and combination of multiple components as described above, the photoelectric chiplets proposed in the disclosure have the ability to handle large-scale high-resolution two-dimensional input and output. For complex AI tasks at current stage, the design of chiplets has the potential to support larger-scale network parameters and computational capabilities.

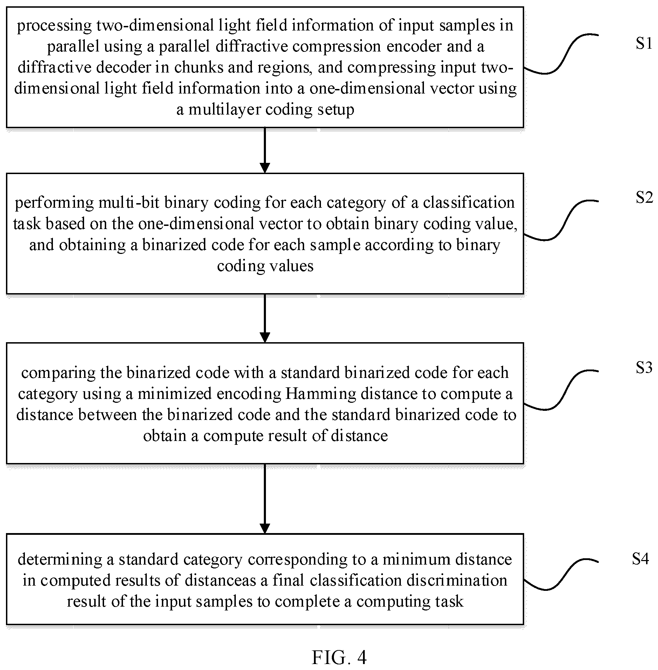

FIG. 4 is a flowchart of a large-scale distributed photonics intelligent computing method according to an embodiment of the disclosure. The method includes:
S1, processing two-dimensional light field information of input samples in parallel using a parallel diffractive compression encoder and a diffractive decoder in chunks and regions, and compressing the input two-dimensional light field information into a one-dimensional vector using a multilayer coding setup;
S2, performing multi-bit binary coding for each category of a classification task based on the one-dimensional vector to obtain binary coding values, and obtaining a binarized code for each sample according to the binary coding values;
S3, comparing the binarized code with a standard binarized code for each category using a minimized encoding Hamming distance to compute a distance between the binarized code and the standard binarized code to obtain a computed result of distance; and
S4, determining a standard category corresponding to a minimum distance in computed results of distance as a final classification discrimination result of the input samples to complete a computing task.

In an embodiment of the disclosure, a single component or a combination of several components is multiplexed to achieve support for larger-scale input data according to a modular chiplets hardware architecture in the disclosure. In the actual processing of chiplets, the diffractive compression encoder and diffractive decoder support at most 64 channels of data, but for the two-dimensional data in practical applications, it often requires tens to hundreds of pixels on a single side dimension, overall demand for the number of channels is often tens of thousands, which is obviously difficult to be supported by a single piece of hardware. In order to solve this problem, a distributed expanding approach for computational hardware resources is proposed, i.e., using the parallel diffractive compression encoder and diffractive decoder to process large-scale input data in parallel in chunks and regions. Each diffractive compression encoder and diffractive decoder only needs to code or decode a certain small 8*8 region in the two-dimensional input, and uses a multi-layer coding setup (8 times compression in each layer, i.e., multiplexing multi-layer parallel coding and decoding hardware) to compress the high-dimensional input data into low-dimensional data with fewer redundancy for computation.

In an embodiment of the disclosure, direct processing for a large complex task often a larger neural network size. In conventional electrical computing, establishing a large neural network is not difficult due to high robustness of digital computation. However, for ONNs based on analog computation, too deep layers may cause device errors to be accumulated between layers, which ultimately affects the computed result. In order to solve the conflict between the network size and the task complexity, the disclosure proposes to split a deep large neural network into multiple parallel shallow neural networks, which can realize the same function. Under this design idea, a computing task with higher complexity will be split into multiple sub-tasks with lower complexity. For example, a multi-classification task, such as ImageNet, which is a 1000 classification task, will be split into 10 independent binary classification tasks. In each binary classification task, 1000 categories is reallocated randomly into two categories, and this binary classifier will decide which of these two large categories each sample belongs to. For a second classification of categories of these 10 sub-classifiers, a principle of independence and homogeneity is followed, i.e., each second classification will ensure that the numbers of positive and negative categories are basically the same (both around 500), and the classification methods are independent of each other, to enhance the independence of the result of each sub-classifier. In other words, the disclosure performs 10-bit binary coding on each of these 1000 categories. Each binary sub-classifier determines the binary code value of a corresponding bit, and ultimately yield a final 10-bit binary category code for each sample as a representation of the final classification result. It is noted that this distributed computing method also has the potential for incremental accuracy improvement. For example, the disclosure may expand the differences between codes of each category by introducing an 11th binary classification encoder to an original system with 10 sub-classifiers, and thus improve the accuracy. By using this method for splitting and simplifying a task, the architecture of chiplets proposed in the disclosure can complete the computation of each binary sub-classifier by establishing a 6-layer deep photonic neural network. By adding incremental boosts of additional classifiers, overall accuracy is increased to an accuracy level equivalent to accuracy of electrical computing with 1000 classifications at the current stage.

In an embodiment of the disclosure, under the aforementioned distributed computing architecture, a large-scale computing task is decomposed in parallel decomposition and computed by a photonic neural network, to obtain a binarized sequence representing the final result. At this step, the binarized sequence is further converted into a final classification result representation. The disclosure uses a principle of minimizing a coding Hamming distance or minimizing an Euclidean distance, to compare the binarized code output of the input sample with the standard binarized code of each category, and computes a distance between the binarized code and the 1000 standard codes, and takes the standard category corresponding to the minimum distance as the final classification discrimination result of this input sample, and completes the overall computing task.

In conclusion, the disclosure eliminates the dimensional redundancy of two-dimensional information input as much as possible through the diffractive coding and decoding of the large-scale chiplets, which makes the computation more efficient. Since the diffractive computing is passive, the energy efficiency is improved by up to two orders of magnitude compared to other AI chips. Through the reconfigurable interference feature embedder and the diffractive compression encoder with global training weights, the overall reconfigurable multiplexing of computational functions is realized. Although the adjustable network weight only correspond to interference computing portion, there is no obvious constraint on richness of network functions, which proposes a new solution idea for the economy and convenience of photonic chip reconfiguration. The task with larger computational complexity is solved in a distributed manner by parallelized splitting the computing task, which provides new ideas for simplification processing of complex future AI models. It greatly extends a scale advantage and low energy consumption advantage of photonic neural network computing, which ultimately empowers AGI and large-scale network photonic computing.

Further, the disclosure breaks the limitations of traditional photonic computing chips based on a single structure with respect to limited computational scale and insufficient multiplexing expansion capability, and provides the possibility for on-chip integrated photoelectric neural networks using the silicon optical process to process complex multi-dimensional tasks and realize large-scale photonic neural networks at the level of ten million neurons.

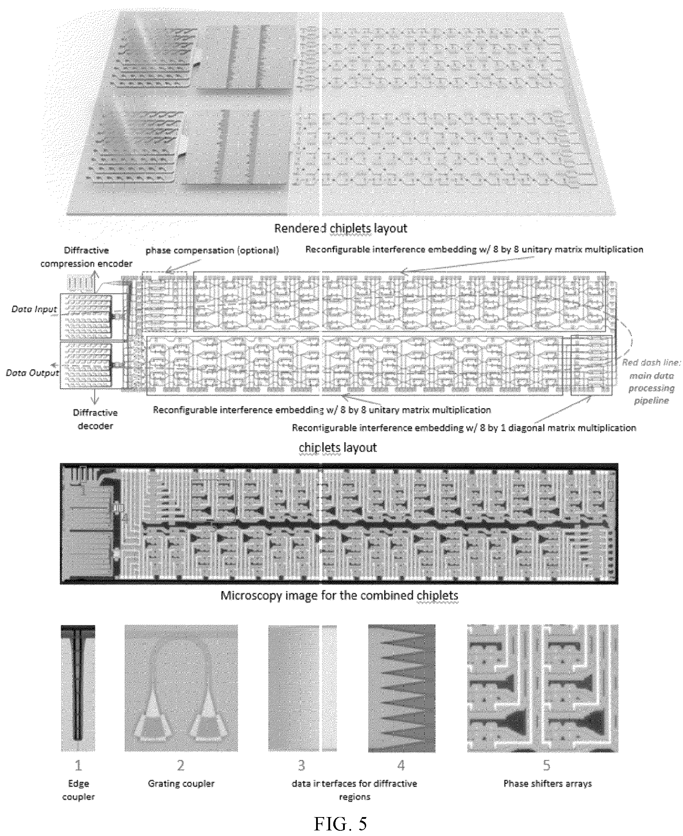

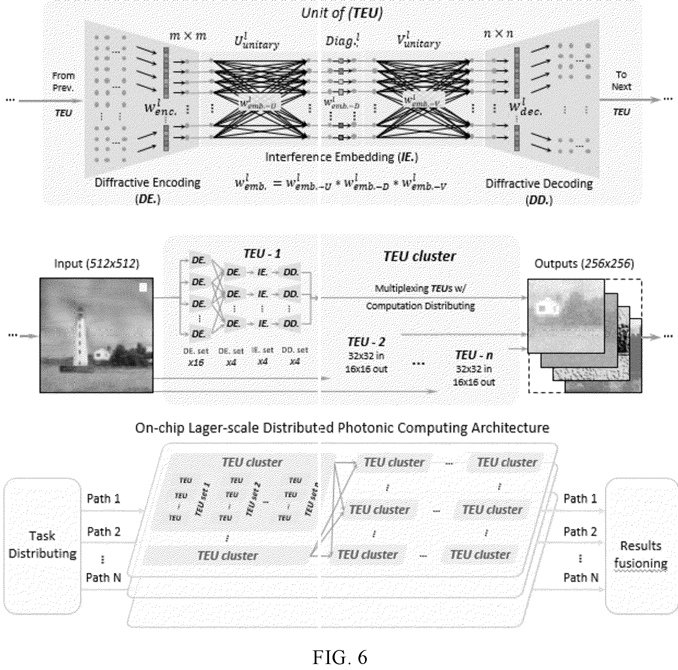

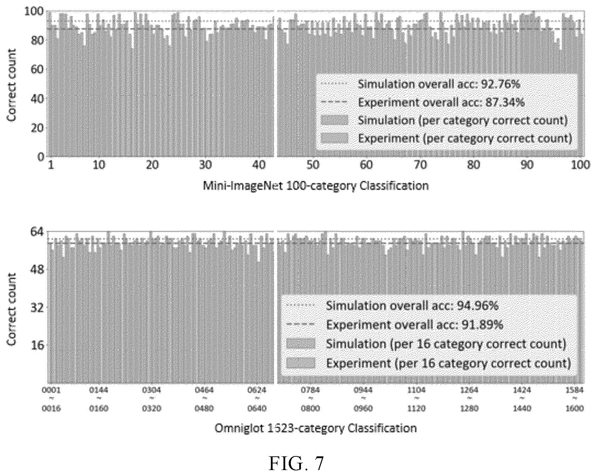

The validation of the large-scale distributed photoelectric intelligent computing method of the embodiments of the disclosure is shown below with reference to FIGS. 5, 6 and 7.

It is understood that the disclosure uses the mini-ImageNet 100 classification dataset to illustrate the application method and the computational process of the disclosure. Each sample in this dataset is a three-channel color image data with a resolution of 64*64 pixels. The output shall be a classification prediction for each sample. The computational process can be macroscopically divided into two main steps, one of which is the distributed deployment of computational resources, i.e., realizing a complete neural network with a certain size by hardware multiplexing the invented chiplets. Second, the decomposition and distributed parallel processing of the tasks to be computed, i.e., splitting a complex multi-category classification task into several parallel binary classification tasks while obtaining computed results of these binary classification. Finally, the multiple binary classification results are fused to output the final classification result.

In detail, for each sample, in the disclosure, original 64*64 dimensional data is first compressed into 64*8 channels using 64 M1, i.e., 64-channel diffractive compression encoders, and then the compressed data is further compressed into 8*8 channels using 8 reconfigurable compression and compute encoders Mas. Each of Mas is composed of M1 and M2. This 64-channel coded information is further input to 8 M2 for computation, and then up-sampled to 64*8 channels using the 8 groups of M2 and M3, and recovered to 32*32 channel scale using 4 groups of output interfaces and M3.

After the above component combination multiplexing computation, a layer of on-chip photonics computation with two times down-sampling is completed. In a similar manner, a set of binary classification sub-networks consisting of six layers of the above computation manner is established in the disclosure, and each sub-network operates separately and independently to obtain a series of binary classification results. In practical experiments, accuracy of each binary classification can reach 92%. Finally, by deploying a total of 17 binary classification sub-classifiers, a photonic neural network with a total amount of parameters of 13.96M is established in the disclosure, which achieves the accuracy greater than 90% in a total of 100 classifications, and achieves the similar accuracy performance of electrical computing at the current stage. Meanwhile, due to a passive nature of the diffractive compression encoder and diffractive decoder, and the low-power consumption of the reconfigurable interference feature embedder, power consumption of integrated on-chip computation is reduced by 2 orders of magnitude relative to other AI specific chips, thereby reaching a maximum level of 140 TOPS/W.

The integrated photonics on-chip hybrid photoelectric diffractive-interference large-scale neural network used in the embodiments has the following characteristics. First, the network structure is flexible and variable. Due to the manner using modular diffractive and interference computing units in the disclosure, a network construction scale can be flexibly selected according to task difficulty and accuracy requirement, and different network functions can be realized by controlling M2, to complete the computing of large-scale complex tasks using a most reasonable scale and structure. Second, the network scale is incrementally scalable. Since the complex task is split into multiple simple sub-tasks, more sub-tasks can be introduced to incrementally improve the final task performance. Third, the power consumption of computation is extremely low. Due to the use of passive diffractive compression encoder and diffractive decoder, multiple data coding and decoding operations can be accomplished without additional power supply, which ensures controllable power consumption during large model computation.

The information processing process involved in the disclosure has been validated with multiple datasets and shows high robustness, stability and accuracy. Meanwhile, the flexible and variable network structure gives the disclosure high adaptability and migration.

In addition, terms such as "first" and "second" are used herein for purposes of description and are not intended to indicate or imply the relative importance or implicitly specify the number of technical features indicated. Therefore, the feature defined with "first" and "second" may explicitly or implicitly include at least one such feature. In the description of the disclosure, "a plurality of" means at least two, for example, two or three, unless specified otherwise.

## Claims

1. A large-scale distributed photoelectric intelligent computing system (10), comprising a diffractive compression encoder (100), a reconfigurable interference feature embedder (200), and a diffractive decoder (300); wherein
the diffractive compression encoder (100) is configured to collect two-dimensional light field information through a grating array, convert the two-dimensional light field information into one-dimensional information through waveguide transmission and transmit the one-dimensional information to a first diffractive region, and perform computing by using a diffractive coding weight to output a one-dimensional vector through an output end of the first diffractive region;
the reconfigurable interference feature embedder (200) consists of an interferometer array composed of a plurality of thermo-optical phase modulators, and the interferometer array is configured to perform a multiplication operation on the one-dimensional vector, to output a computed result in a one-dimensional vector form; and
the diffractive decoder (300) is configured for diffractive decoding the computed result in the one-dimensional vector form through a second diffractive region, to compute and output final light field information through a diffractive decoding weight.

2. The system (10) of claim 1, wherein the system further comprises an information importing and collecting interface array, the information importing and collecting interface array is disposed in the diffractive compression encoder (100), the reconfigurable interference feature embedder (200), and the diffractive decoder (300), respectively, and the information importing and collecting interface array is configured to read multiple of the one-dimensional information, the one-dimensional vector, the computed result in the one-dimensional vector form, and the final light field information.

3. The system (10) of claim 1 or 2, wherein the diffractive compression encoder (100) and the reconfigurable interference feature embedder (200) form a reconfigurable compression and compute encoder, computed results of data of the reconfigurable compression and compute encoder form a two-dimensional dataset and the two-dimensional dataset is compressed by inputting into a new diffractive compression encoder (100).

4. The system (10) of any one of claims 1 to 3, wherein the first diffractive region and the second diffractive region are each made up of air trenches of different lengths, respectively, corresponding basic parameters of the first diffractive region and the second diffractive region are written into the first diffractive region and the second diffractive region by means of etched air trenches and a double exposure process, respectively, and the diffractive coding weight and the diffractive decoding weight are obtained by training a preset training dataset, respectively.

5. The system (10) of any one of claims 1 to 4, wherein the diffractive compression encoder (100), the reconfigurable interference feature embedder (200), and the diffractive decoder (300) are obtained by on-chip integration using a silicon photonics process.

6. The system (10) of any one of claims 1 to 5, wherein a fluctuating light field having spatially distributed amplitude and phases is constructed using a spatial light modulation device, to make the fluctuating light field focus at the grating array and serve as input data of the diffractive compression encoder (100).

7. The system (10) of any one of claims 1 to 6, wherein the two-dimensional light field information is a 64-channel signal, and each of the one-dimensional vector, the computed result in the one-dimensional vector form, and the final light field information is an 8-channel signal.

8. The system (10) of claim 1, wherein two unitary matrix multipliers and a diagonal matrix multiplier are deployed on the interferometer array for decomposing an arbitrary matrix into a product of a first unitary matrix, a diagonal matrix, and a second unitary matrix through singular value decomposition, to realize a multiplication operation of the arbitrary matrix.

9. The system (10) of claim 8, wherein elements of the first or second unitary matrix are obtained by machine learning gradient descent training and mapped to phase change parameters of a phase shifter of the interferometer array.

10. The system (10) of claim 9, wherein supply voltage of the phase shifter is dynamically adjusted in real time to realize multiplication of different matrices.

11. A large-scale distributed photoelectric intelligent computing method, comprising:
processing two-dimensional light field information of input samples in parallel using a parallel diffractive compression encoder and a diffractive decoder in chunks and regions, and compressing input two-dimensional light field information into a one-dimensional vector using a multilayer coding setup (S1);
performing multi-bit binary coding for each category of a classification task based on the one-dimensional vector to obtain binary coding values, and obtaining a binarized code for each sample according to the binary coding values (S2);
comparing the binarized code with a standard binarized code for each category using a minimized encoding Hamming distance to compute a distance between the binarized code and the standard binarized code to obtain a computed result of distance (S3); and
determining a standard category corresponding to a minimum distance in computed results of distance as a final classification discrimination result of the input samples to complete a computing task (S4).

12. The method of claim 11, wherein each of the binary code values are determined by a binary sub-classifier.

13. The method of claim 11 or 12, wherein the binarized code for each sample comprises a plurality of bits, and each of the binary code values corresponds to a bit.

## Patentansprüche

1. Verteiltes photoelektrisches intelligentes Rechensystem (10) in großem Maßstab, umfassend einen diffraktiven Kompressionsencoder (100), einen rekonfigurierbaren Interferenz-Merkmal-Embedder (200) und einen diffraktiven Decoder (300); worin
der diffraktive Kompressionsencoder (100) dafür ausgelegt ist, zwei-dimensionale Lichtfeldinformationen durch ein Gitterarray zu sammeln, die zwei-dimensionalen Lichtfeldinformationen in eindimensionale Informationen durch Wellenleiterübertragung umzuwandeln und die eindimensionalen Informationen einem ersten diffraktiven Bereich zu übertragen, und Rechnen durch Verwendung eines diffraktiven Codierungsgewichts durchzuführen, um einen eindimensionalen Vektor durch ein Ausgabeende des ersten diffraktiven Bereichs auszugeben;
der rekonfigurierbare Interferenz-Merkmal-Embedder (200) aus einem Interferometerarray besteht, der aus einer Vielzahl von thermo-optischen Phasenmodulatoren zusammengesetzt ist, und das Interferometerarray dafür ausgelegt ist, eine Multiplikationsoperation am eindimensionalen Vektor durchzuführen, um ein errechnetes Ergebnis in einer eindimensionalen Vektorform auszugeben; und
der diffraktive Decoder (300) dafür ausgelegt ist, das errechnete Ergebnis in der eindimensionalen Vektorform durch einen zweiten diffraktiven Bereich diffraktiv zu dekodieren, um endgültige Lichtfeldinformationen durch ein diffraktives Decodierungsgewicht zu errechnen und auszugeben.

2. System (10) nach Anspruch 1, worin das System ferner ein Informationsimportier- und Sammelschnittstellenarray umfasst, das Informationsimportier- und Sammelschnittstellenarray jeweils im diffraktiven Kompressionsencoder (100), im rekonfigurierbaren Interferenz-Merkmal-Embedder (200) und im diffraktiven Decoder (300) angeordnet ist und das Informationsimportier- und Sammelschnittstellenarray dafür ausgelegt ist, mehrere von den eindimensionalen Informationen, dem eindimensionalen Vektor, dem errechneten Ergebnis in der eindimensionalen Vektorform und den endgültigen Lichtfeldinformationen zu lesen.

3. System (10) nach Anspruch 1 oder 2, worin der diffraktive Kompressionsencoder (100) und der rekonfigurierbare Interferenz-Merkmal-Embedder (200) einen rekonfigurierbaren Kompressions- und Rechenencoder bilden, errechnete Ergebnisse von Daten des rekonfigurierbaren Kompressions- und Rechenencoders einen zweidimensionalen Datensatz bilden und der zweidimensionale Datensatz durch Eingeben in einen neuen diffraktiven Kompressionsencoder (100) komprimiert ist.

4. System (10) nach einem der Ansprüche 1 bis 3, worin der erste diffraktive Bereich und der zweite diffraktive Bereich je aus Luftgräben von unterschiedlichen Längen jeweils gebildet sind, entsprechende Grundparameter des ersten diffraktiven Bereichs und des zweiten diffraktiven Bereichs jeweils in den ersten diffraktiven Bereich und in den zweiten diffraktiven Bereich mittels geätzter Luftgräben und eines Doppelbelichtungsprozesses geschrieben werden, und das diffraktive Codierungsgewicht und das diffraktive Decodierungsgewicht jeweils durch Trainieren eines vorgegebenen Trainerdatensatzes erhalten werden.

5. System (10) nach einem der Ansprüche 1 bis 4, worin der diffraktive Kompressionsencoder (100), der rekonfigurierbare Interferenz-Merkmal-Embedder (200) und der diffraktive Decoder (300) durch On-Chip-Integration unter Verwendung eines Silizium-Photonik-Prozesses erhalten werden.

6. System (10) nach einem der Ansprüche 1 bis 5, worin ein schwankendes Lichtfeld, das räumlich verteilte Amplitude und Phasen hat, unter Verwendung einer räumlichen Lichtmodulationsvorrichtung gebildet wird, um zu bewirken, dass das schwankende Lichtfeld sich auf das Gitterarray fokussiert und als Eingabedaten des diffraktiven Kompressionsencoders (100) dient.

7. System (10) nach einem der Ansprüche 1 bis 6, worin die zwei-dimensionalen Lichtfeldinformationen ein Signal mit 64 Kanälen sind, und jeder bzw. jedes bzw. jede von dem eindimensionalen Vektor, vom errechneten Ergebnis in der eindimensionalen Vektorform und den endgültigen Lichtfeldinformationen ein Signal mit 8 Kanälen ist bzw. sind.

8. System (10) nach Anspruch 1, worin zwei unitäre Matrix-Multiplikatoren und ein diagonaler Matrix-Multiplikator am Interferometerarray eingesetzt werden, um eine willkürliche Matrix in ein Produkt einer ersten unitären Matrix, einer diagonalen Matrix und einer zweiten unitären Matrix über Singulärwertzerlegung zu zerlegen, um eine Multiplikationsoperation der willkürlichen Matrix zu verwirklichen.

9. System (10) nach Anspruch 8, worin Elemente der ersten oder zweiten unitären Matrix durch maschinelles Lernen-Gradientenabstiegs-Trainieren erhalten werden und auf Phasenänderungsparameter eines Phasenschiebers des Interferometerarrays abgebildet werden.

10. System (10) nach Anspruch 9, worin die Speisespannung des Phasenschiebers in Echtzeit dynamisch angepasst wird, um Multiplikation verschiedener Matrizen zu verwirklichen.

11. Verteiltes photoelektrisches intelligentes Rechenverfahren in großem Maßstab, umfassend:
Verarbeiten von zwei-dimensionalen Lichtfeldinformationen von Eingangsabtastwerten in paralleler Weise unter Verwendung eines parallelen diffraktiven Kompressionsencoders und eines diffraktiven Decoders in Blöcken und Bereichen, und Komprimieren von eingegebenen zwei-dimensionalen Lichtfeldinformationen in einen eindimensionalen Vektor unter Verwendung einer Mehrschicht-Codiereinstellung (S1);
Durchführen von Mehrbit-Binärcodierung für jede Kategorie einer Klassifizierungsaufgabe aufgrund des eindimensionalen Vektors, um Binärcodierungswerte zu erhalten, und Erhalten eines binärisierten Codes für jeden Abtastwert gemäß den Binärcodierungswerten (S2);
Vergleichen des binärisierten Codes mit einem standardmäßigen binärisierten Code für jede Kategorie unter Verwendung eines minimierten codierenden Hamming-Abstands, um einen Abstand zwischen dem binärisierten Code und dem standardmäßigen binärisierten Code zu berechnen, um ein errechnetes Ergebnis des Abstands zu erhalten (S3); und
Bestimmen einer standardmäßigen Kategorie, die einem Mindestabstand in errechneten Ergebnissen des Abstands entspricht, als endgültiges Klassifizierungs-Diskriminierungsergebnis der Eingangsabtastwerte, um eine Rechenaufgabe zu beenden (S4).

12. Verfahren nach Anspruch 11, worin jeder von den Binärcodewerten von einem binären Unterklassifizierer bestimmt wird.

13. Verfahren nach Anspruch 11 oder 12, worin der binärisierte Code für jeden Abtastwert eine Vielzahl von Bits umfasst, und jeder von den Binärcodewerten einem Bit entspricht.

## Revendications

1. Système informatique intelligent photoélectrique distribué à grande échelle (10), comprenant un codeur de compression diffractif (100), un intégrateur de caractéristiques d'interférence reconfigurable (200) et un décodeur diffractif (300) ; dans lequel
le codeur de compression diffractif (100) est configuré pour collecter des informations de champ lumineux bidimensionnel à travers un réseau de diffraction, convertir les informations de champ lumineux bidimensionnel en informations unidimensionnelles à travers une transmission par guide d'onde et transmettre les informations unidimensionnelles à une première région de diffraction, et effectuer un calcul en utilisant un poids de codage de diffraction pour sortir un vecteur unidimensionnel à travers une extrémité de sortie de la première région de diffraction ;
l'intégrateur de caractéristiques d'interférence reconfigurable (200) consiste en un réseau d'interféromètres composé d'une pluralité de modulateurs de phase thermo-optiques, et le réseau d'interféromètres est configuré pour effectuer une opération de multiplication sur le vecteur unidimensionnel, pour émettre un résultat calculé sous une forme de vecteur unidimensionnel ; et
le décodeur diffractif (300) est configuré pour décoder par diffraction le résultat calculé sous la forme de vecteur unidimensionnel à travers une seconde région de diffraction, pour calculer et fournir des informations de champ lumineux final à travers un poids de décodage par diffraction.

2. Système (10) selon la revendication 1, dans lequel le système comprend en outre un réseau d'interface d'importation et de collecte d'informations, le réseau d'interface d'importation et de collecte d'informations est disposé dans le codeur de compression diffractif (100), l'intégrateur de caractéristiques d'interférence reconfigurable (200) et le décodeur diffractif (300), respectivement, et le réseau d'interface d'importation et de collecte d'informations est configuré pour lire des multiples des informations unidimensionnelles, du vecteur unidimensionnel, du résultat calculé sous la forme de vecteur unidimensionnel et des informations de champ lumineux final.

3. Système (10) selon la revendication 1 ou 2, dans lequel le codeur de compression diffractif (100) et l'intégrateur de caractéristiques d'interférence reconfigurable (200) forment un codeur de compression et de calcul reconfigurable, les résultats calculés des données du codeur de compression et de calcul reconfigurable forment un ensemble de données bidimensionnel et l'ensemble de données bidimensionnel est comprimé par entrée dans un nouveau codeur de compression diffractif (100).

4. Système (10) selon l'une quelconque des revendications 1 à 3, dans lequel la première région de diffraction et la seconde région de diffraction sont chacune constituées de tranchées d'air de longueurs différentes, respectivement, les paramètres de base correspondants de la première région de diffraction et de la seconde région de diffraction sont écrits dans la première région de diffraction et la seconde région de diffraction au moyen de tranchées d'air gravées et d'un processus de double exposition, respectivement, et le poids de codage de diffraction et le poids de décodage de diffraction sont obtenus en formant un ensemble de données de formation prédéfini, respectivement.

5. Système (10) selon l'une quelconque des revendications 1 à 4, dans lequel le codeur de compression diffractif (100), l'intégrateur de caractéristiques d'interférence reconfigurable (200) et le décodeur diffractif (300) sont obtenus par intégration sur puce en utilisant un procédé photonique au silicium.

6. Système (10) selon l'une quelconque des revendications 1 à 5, dans lequel un champ lumineux fluctuant ayant une amplitude et des phases réparties dans l'espace est construit en utilisant un dispositif de modulation spatiale de la lumière, pour faire en sorte que le champ lumineux fluctuant se concentre sur le réseau de diffraction et serve de données d'entrée du codeur de compression diffractif (100).

7. Système (10) selon l'une quelconque des revendications 1 à 6, dans lequel les informations de champ lumineux bidimensionnel sont un signal à 64 canaux, et chacun du vecteur unidimensionnel, le résultat calculé sous la forme de vecteur unidimensionnel, et les informations de champ lumineux final sont un signal à 8 canaux.

8. Système (10) selon la revendication 1, dans lequel deux multiplicateurs de matrice unitaire et un multiplicateur de matrice diagonale sont déployés sur le réseau d'interféromètres pour décomposer une matrice arbitraire en un produit d'une première matrice unitaire, d'une matrice diagonale et d'une seconde matrice unitaire par décomposition en valeurs singulières, pour réaliser une opération de multiplication de la matrice arbitraire.

9. Système (10) selon la revendication 8, dans lequel les éléments des première ou seconde matrices unitaires sont obtenus par un entraînement de descente de gradient d'apprentissage automatique et mappés sur des paramètres de changement de phase d'un déphaseur du réseau d'interféromètres.

10. Système (10) selon la revendication 9, dans lequel la tension d'alimentation du déphaseur est ajustée dynamiquement en temps réel pour réaliser la multiplication de différentes matrices.

11. Procédé de calcul intelligent photoélectrique distribué à grande échelle, comprenant :
le traitement d'informations de champ lumineux bidimensionnel d'échantillons d'entrée en parallèle à l'aide d'un codeur de compression diffractif parallèle et d'un décodeur diffractif en morceaux et en régions, et la compression des informations de champ lumineux bidimensionnel d'entrée en un vecteur unidimensionnel à l'aide d'une configuration de codage multicouche (S1) ;
la réalisation d'un codage binaire multi-bit pour chaque catégorie d'une tâche de classification basée sur le vecteur unidimensionnel pour obtenir des valeurs de codage binaire, et l'obtention d'un code binarisé pour chaque échantillon selon les valeurs de codage binaire (S2) ;
la comparaison du code binarisé avec un code binarisé standard pour chaque catégorie en utilisant une distance de Hamming de codage minimisée pour calculer une distance entre le code binarisé et le code binarisé standard pour obtenir un résultat calculé de distance (S3) ; et
la détermination d'une catégorie standard correspondant à une distance minimale dans les résultats calculés de la distance en tant que résultat final de discrimination de classification des échantillons d'entrée pour achever une tâche de calcul (S4).

12. Procédé selon la revendication 11, dans lequel chacune des valeurs de code binaire est déterminée par un sous-classificateur binaire.

13. Procédé selon la revendication 11 ou 12, dans lequel le code binarisé pour chaque échantillon comprend une pluralité de bits, et chacune des valeurs de code binaire correspond à un bit.
